# DEMANDE DE BREVET EUROPEEN

(11) **EP 1 964 494 A1**
(43) Date de publication de la demande: **03.09.2008**
(21) Numéro de dépôt: 08100754.4
(22) Date de dépôt: 22.01.2008
(51) Int. Cl.: A47C 27/10, F16K 31/06

(54) **Dispositif de support de type matelas comprenant au moins une electrovanne permettant de commander l'alimentation/evacuation de fluide des compartiment du matelas**

(30) Priorité: 27.02.2007 FR 0701391
(71) Demandeur: HILL-ROM INDUSTRIES S.A., 34100 Montpellier (FR)
(72) Inventeur: Caminade, Jean-Luc, 34430, Saint Jean de Vedas (FR)
(74) Mandataire: Domange, Maxime

(57) **Abrégé**

L'invention concerne un dispositif de support, en particulier du corps d'un individu, de type de matelas (1) comprenant une pluralité de n compartiments (2), i, de préférence au moins trois compartiments, de préférence encore de 3 à 24 compartiments aptes à être gonflés d'un fluide, en particulier gonflés d'air, une pluralité de p dits compartiments, p étant un nombre entier de 2 à n, comprenant chacun au moins un orifice d'alimentation et/ou évacuation de fluide (4-1,4-2) dudit compartiment et au moins une électrovanne (3-1,3-2) permettant de commander, l'alimentation de fluide et/ou l'évacuation de fluide desdits compartiments dans lequel dispositif de support lesdites électrovannes coopèrent avec ou sont intégrées auxdits orifices d'alimentation et/ou d'évacuation, chaque dite électrovanne (3-1,3-2) étant dédiée au remplissage et/ou vidange d'un seul compartiment.

## Description

La présente invention concerne un dispositif de support, en particulier du corps d'un individu, de type matelas, comprenant une pluralité de compartiments aptes à être gonflés d'un fluide, en particulier gonflé d'air comprimé.

En particulier, ces compartiments sont en forme de boudins, chaque boudin s'étendant transversalement par rapport à la direction longitudinale du matelas et les différents boudins étant disposés côte à côte dans la direction longitudinale du matelas.

Chaque compartiment comprend en général un orifice d'alimentation de fluide et un orifice d'évacuation de fluide.

Pour remplir/gonfler un compartiment, on ouvre une première électrovanne commandant l'alimentation à travers ledit orifice d'alimentation puis on la ferme quand la pression nécessaire est atteinte tout en maintenant fermée une deuxième électrovanne commandant l'évacuation de fluide à partir dudit orifice d'évacuation. Et, inversement, pour vider ou dégonfler un compartiment, pour ajuster la pression à l'intérieur du compartiment, on maintient fermée ladite première électrovanne commandant l'orifice d'alimentation et on ouvre la deuxième électrovanne commandant l'évacuation à partir de l'orifice d'évacuation.

Des matelas de ce type sont utilisés en milieux médicalisés car ils permettent d'assurer une meilleure répartition du fluide à l'intérieur du matelas. Et, surtout, ils permettent, en fonction du nombre d'électrovannes mises en oeuvre, de contrôler individuellement la pression et donc le remplissage des compartiments dans différentes zones du matelas.

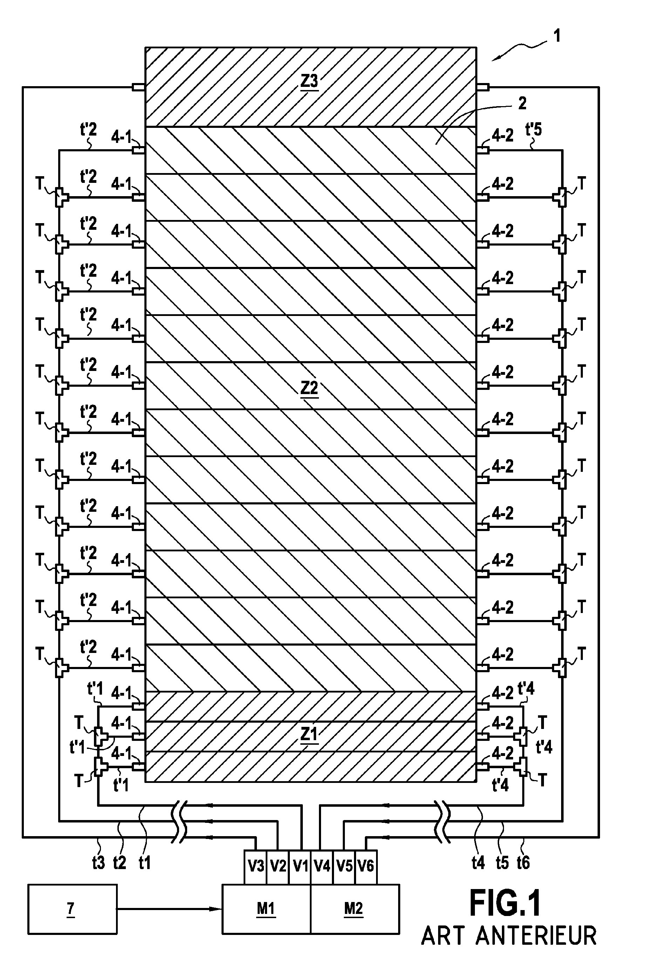

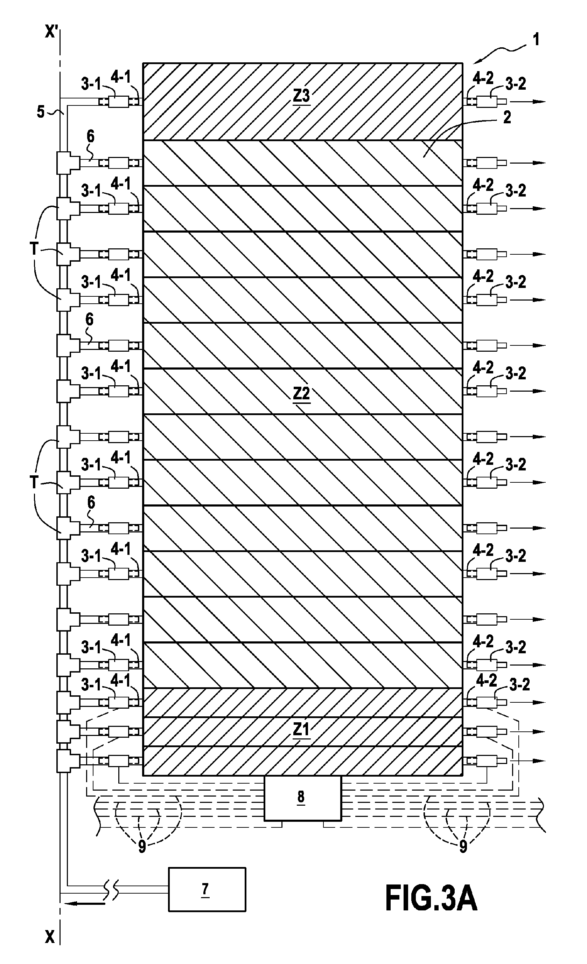

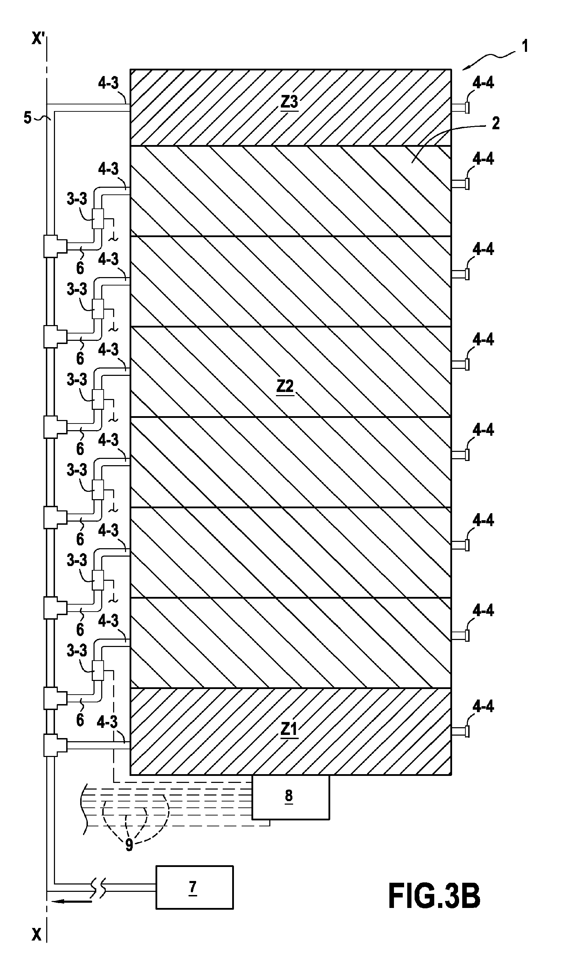

A titre illustratif sur les figures 1 et 3, on a représenté schématiquement des matelas comprenant seize compartiments répartis en trois zones :
- une première zone de la tête aux épaules avec un seul compartiment,
- une deuxième zone des épaules jusqu'aux mollets comprenant douze compartiments, et
- une troisième zone au niveau des talons comprenant trois compartiments.

En principe, le confort idéal d'un patient, notamment pour éviter la formation d'escarres ou réduire les douleurs localisées en certaines zones d'appui du corps sur le matelas, est obtenu lorsque la pression exercée par les différentes zones du corps sur le matelas (appelée « pression d'interface ») est sensiblement identique pour tous les points de la surface de contact du corps avec le matelas et si, d'autre part, cette surface de contact du corps avec le matelas est la plus élevée possible, ce qui requiert d'adapter l'enfoncement du corps dans les différents compartiments selon les différentes parties du corps.

Pour ce faire, on doit réaliser une répartition de la pression à l'intérieur des compartiments en contrôlant donc leur remplissage/vidange dans les différents compartiments le long de la direction longitudinale du matelas selon certains calculs pré-établis à partir et en fonction des mesures effectuées avec des capteurs dans, sur ou dessous le matelas selon le type de capteurs mis en oeuvre.

Ces capteurs connus de l'homme de l'art peuvent mesurer la pression à l'intérieur des compartiments ou l'enfoncement du corps du patient dans les compartiments donnés du matelas, tel que décrit par exemple dans le brevet européen EP 0 676 158 au nom de la demanderesse.

Le contrôle et la régulation des remplissage/vidange des compartiments avec des électrovannes permet aussi de fournir des matelas fonctionnant en mode dit « mode à alternance de pressions » dans lequel on réalise le dégonflage puis regonflage d'un certain nombre de compartiments régulièrement répartis dans la longueur du matelas et, simultanément, pour lesdits compartiments concernés. Par exemple, on dégonfle/regonfle un compartiment sur deux ou un compartiment sur trois puis on dégonfle/regonfle les compartiments adjacents aux compartiments précédents dégonflés puis regonflés.

Ainsi, chaque compartiment du matelas est successivement et de proche en proche dégonflé/regonflé, créant une sorte de vague se déplaçant dans la direction longitudinale du matelas en aller et retour et réalisant un massage du patient favorisant la vascularisation des tissus mous à l'interface avec le matelas lors du regonflement du compartiment ou à minimiser les effets de l'ischémie, notamment l'anoxie ou l'hypoxie, lors du dégonflement du compartiment.

Actuellement, les électrovannes proposées sont conçues pour être montées dans des boîtiers notamment sur des distributeurs pneumatiques, plus généralement sur un collecteur/distributeur multiple de type manifold combiné, le cas échéant, à un boîtier de commande électronique permettant de commander l'alimentation et l'évacuation du fluide de façon modulée et contrôlée dans les différentes zones de compartiment du matelas. Les différentes électrovannes d'alimentation sont, en général, alimentées en fluide à partir d'une même source d'alimentation, le cas échéant, une même pompe ou compresseur pour injecter, le cas échéant de l'air ou gaz comprimé, dans les compartiments.

Ces boîtiers techniques de commande et de distribution de fluide de type manifold regroupant les différentes électrovannes sont disposés par exemple au pied du lit et sont donc nécessairement relativement éloignés de certains des compartiments auxquels les électrovannes sont reliées par des tuyaux d'alimentation et tuyaux d'évacuation.

En général, chaque électrovanne assure l'alimentation, respectivement l'évacuation de plusieurs compartiments afin de limiter le nombre d'électrovannes.

La limitation du nombre d'électrovannes permet aussi de limiter le nombre de tuyaux au départ du manifold et donc l'encombrement des tuyaux. Toutefois, ceci requiert la mise en oeuvre d'électrovannes dimensionnées de manière à pouvoir délivrer un débit suffisant pour alimenter une pluralité de compartiments.

A titre illustratif, on a représenté sur la figure 1, un manifold comprenant trois électrovannes d'alimentation sur lesquelles sont montés trois tuyaux principaux d'alimentation à partir de chacun desquels des dérivations, par l'intermédiaire de raccords en T de tuyaux secondaires d'alimentation alimentent n compartiments.

Symétriquement, n tuyaux secondaires d'évacuation connectés aux orifices d'évacuation desdits compartiments sont raccordés par l'intermédiaire du raccord en T à trois tuyaux principaux d'évacuation, l'évacuation assure la circulation du fluide jusqu'à trois vannes d'évacuation sur le même manifold.

Plus précisément sur la figure 1, les vannes V₃ et V₆ commandent un seul compartiment d'une première zone de tête par l'intermédiaire d'un premier tuyau principal d'alimentation et, respectivement, un premier tuyau d'évacuation.

Les vannes V₂ et V₅ assurent l'alimentation et, respectivement, l'évacuation de douze compartiments d'une zone médiane s'étendant sur tout le corps depuis les épaules jusqu'aux jambes, les douze compartiments étant alimentés par douze deuxièmes tuyaux secondaires d'alimentation et, respectivement, d'évacuation, eux-mêmes raccordés à un deuxième tuyau principal d'alimentation et un deuxième tuyau principal d'évacuation connectés auxdites vannes correspondantes.

Enfin, les vannes V₁ et V₄ commandent le remplissage de trois compartiments constitués d'une zone de pied à partir d'un troisième tuyau principal d'alimentation et troisième tuyau principal d'évacuation, chaque troisième tuyau principal d'alimentation et respectivement d'évacuation étant raccordé à trois troisièmes tuyaux secondaires d'alimentation et, respectivement, trois tuyaux secondaires d'évacuation.

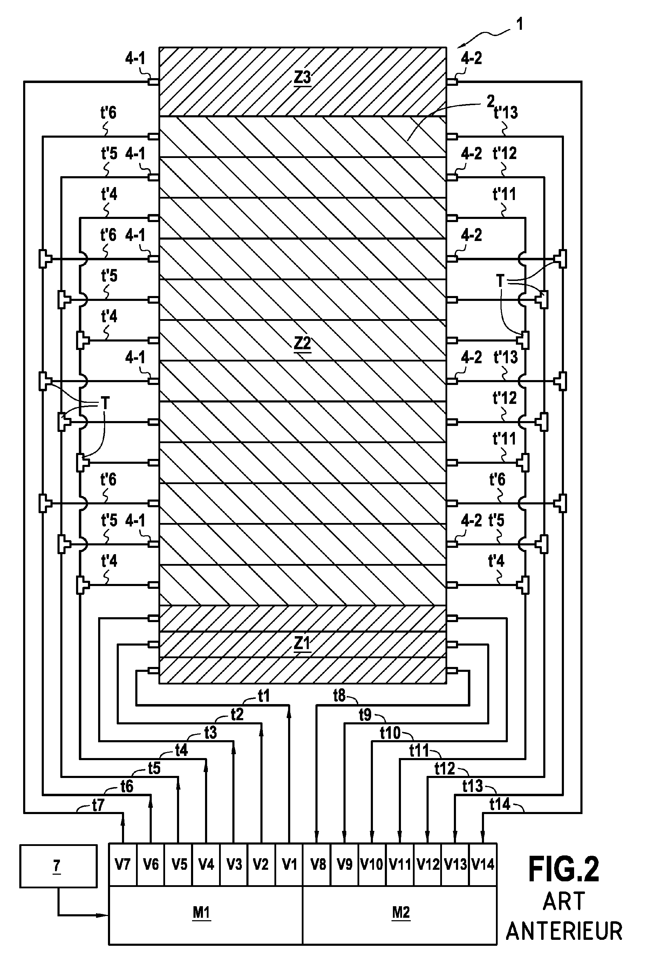

Sur la figure 2, on a représenté une variante de dispositif d'alimentation d'un matelas avec seize compartiments également répartis en trois zones mais pouvant fonctionner en « mode à alternance de pressions » avec un compartiment sur trois pouvant être dégonflé/regonflé alternativement, ce qui requiert la mise en oeuvre de quatorze électrovannes (sept électrovannes d'alimentation et sept électrovannes d'évacuation), sept tuyaux principaux d'alimentation et à sept tuyaux principaux d'évacuation.

Il y a lieu de noter que ces tuyaux principaux d'alimentation ou d'évacuation doivent présenter une certaine rigidité et une section d'un certain diamètre pour permettre l'alimentation d'une pluralité de tuyaux secondaires et, également, pour éviter des plicatures accidentelles dans leur parcours, entre le manifold jusqu'au compartiment le plus éloigné. Ces tuyaux sont disposés sur le côté du matelas, en général à l'intérieur de la housse de protection du matelas. On comprend que la multiplicité de ces tuyaux représente un encombrement important difficile à mettre en place et à mettre en oeuvre. Le nombre de tuyaux augmentant les risques de plicature. En pratique et de manière standard, ces tuyaux présentent des sections circulaires de diamètre externe de 10 à 20 mm, plus particulièrement d'environ 15 mm et un diamètre interne de 5 à 15 mm, plus particulièrement d'environ 10 mm.

Compte-tenu du fait que chaque électrovanne doit pouvoir commander le remplissage ou l'évacuation d'une pluralité de compartiments sur une distance relativement importante, lesdites électrovannes doivent fournir un débit de fluide relativement important en pratique, pouvant aller jusqu'à 50 I/min. Ces électrovannes représentent donc un poids, un encombrement ainsi qu'un cours relativement important auquel s'ajoute le poids, l'encombrement et le coût du manifold lui-même. A ceci s'ajoutent aussi les nuisances sonores dues à ces électrovannes et les consommations d'énergie importantes tentent pour activer une commande que pour maintenir une commande d'ouverture ou de fermeture desdites électrovannes.

Au total, les différentes contraintes évoquées ci-dessus rendent très difficile de mettre en oeuvre un système d'alimentation/évacuation de fluide de ce type pour chaque compartiment, sans créer des difficultés de mise en oeuvre considérables.

Le but de la présente invention est de fournir un dispositif d'alimentation/évacuation de fluide d'une pluralité de compartiments d'un matelas qui soit moins encombrant et moins coûteux, plus simple et plus aisé en mettre en oeuvre et plus généralement, qui soit amélioré par rapport au système actuellement mis en oeuvre.

Un autre but de la présente invention est de fournir un dispositif d'alimentation/évacuation de fluide d'une pluralité de compartiments d'un matelas qui puisse permettre de contrôler et réguler le remplissage/vidage en fluide de chaque compartiment individuellement, sans impliquer des difficultés excessives de mise en oeuvre, comme c'est le cas dans les systèmes actuellement proposés.

Un autre but de la présente invention est de fournir un dispositif d'alimentation/évacuation en fluide d'une pluralité de compartiments d'un matelas qui puisse fonctionner selon différents types de modes alternatifs au choix.

Pour ce faire, la présente invention fournit un dispositif de support, en particulier du corps d'un individu, de type de matelas comprenant une pluralité de n compartiments, i, de préférence au moins trois compartiments, de préférence encore de trois à vingt-quatre compartiments aptes à être gonflés d'un fluide, en particulier gonflés d'air, une pluralité de p dits compartiments, p étant un nombre entier de 2 à n, comprenant chacun au moins un orifice d'alimentation et/ou évacuation de fluide du dit compartiment et au moins une électrovanne permettant de commander, l'alimentation de fluide et/ou l'évacuation de fluide desdits compartiments caractérisé en ce que chaque dite électrovanne coopèrent avec ou est intégrée à un dit orifice d'alimentation et/ou d'évacuation, chaque dite électrovanne étant dédiée au remplissage et/ou vidange d'un seul compartiment, et lesdites électrovannes ne coopèrent pas avec ou ne sont pas intégrées à un collecteur - distributeur de type manifold.

Dans un mode de réalisation préféré d'un dispositif selon l'invention, les compartiments comprennent chacun un orifice d'alimentation de fluide et un orifice d'évacuation de fluide et chaque dit compartiment concerné comprend ou coopère avec deux électrovannes d'alimentation et respectivement d'évacuation permettant de commander, l'une l'alimentation de fluide et l'autre l'évacuation de fluide et, les dites électrovannes sont intégrées à ou coopèrent avec lesdits orifices d'alimentation et respectivement d'évacuation, chaque dite électrovanne étant dédiée au remplissage ou respectivement à la vidange d'un seul compartiment.

Ce mode de réalisation de réalisation préféré requiert la mise en oeuvre d'électrovannes à deux voies (identifiées comme « électrovanne 2/2 ») et permet de réguler la pression au niveau des compartiments équipés de deux électrovannes, à savoir une électrovanne à chaque orifice, d'alimentation et respectivement d'évacuation du compartiment.

Ces électrovannes deux voies comprennent :
- pour l'électrovanne d'alimentation :
   ■ un premier canal interne communiquant avec ledit orifice d'alimentation du compartiment,
   ■ un deuxième canal interne communiquant avec un tuyau d'alimentation, et
- pour l'électrovanne d'évacuation :
   ■ un premier canal interne communiquant avec un orifice d'évacuation dudit compartiment, et
   ■ un deuxième canal interne communiquant avec un tuyau d'évacuation ou débouchant à l'air libre.

Toutefois, dans un autre mode de réalisation, lesdits compartiments concernés, c'est-à-dire les compartiments comprenant ou coopérant avec une dite électrovanne, comprennent chacun un unique orifice coopérant avec une unique électrovanne à travers laquelle se fait aussi bien l'alimentation que l'évacuation dudit compartiment. Ladite électrovanne coopère ou est intégrée au niveau d'un seul orifice ouvert faisant fonction d'orifice d'alimentation et d'évacuation selon l'activation ou non de ladite électrovanne, l'autre orifice éventuel étant alors obturé.

Cet autre mode de réalisation requiert la mise en oeuvre d'électrovanne à trois voies (dites électrovannes « électrovannes 3/2 »).

Ces électrovannes à trois voies comprennent :
- un premier canal interne débouchant sur un seul orifice ouvert d'alimentation et d'évacuation d'air du compartiment,
- un deuxième canal interne communiquant avec un tuyau d'alimentation de l'électrovanne en fluide, et
- un troisième canal interne débouchant à l'air libre, permettant l'évacuation du fluide du compartiment.

Mais ces électrovannes trois voies permettent de commander uniquement le gonflage/dégonflage d'un compartiment, sans pouvoir en réguler la pression.

Dans tous les cas, lesdites électrovannes 2/2 ou 3/2 n'ayant à alimenter/vider qu'un seul compartiment, elles peuvent être de tailles relativement beaucoup plus petites que les électrovannes classiquement mises en oeuvre dédiées à l'alimentation/évacuation d'une pluralité de compartiments.

En effet, à surpression identique dans le compartiment, les débits de circulations de fluide requis et donc les surfaces de passage des électrovannes sont plus petits avec des électrovannes selon l'invention que pour des électrovannes dédiées chacune à une pluralité de compartiments.

En outre, pour des électrovannes mises en oeuvre et positionnées directement au niveau des orifices des compartiments, la distance entre les électrovannes d'alimentation et d'évacuation, et donc les pertes de charge entre lesdites électrovannes d'alimentation et d'évacuation sont réduites au maximum par rapport aux électrovannes déportées en une même position centralisée, par exemple au pied du lit comme dans la technique antérieure.

Au total, compte tenu de ce que les électrovannes doivent en pratique réguler des surpressions par rapport à la pression atmosphérique dans le matelas de seulement 10 à 100 mbar, les électrovannes selon l'invention doivent délivrer un débit de fluide relativement réduit (du fait qu'elles n'alimentent qu'un seul compartiment) et peuvent donc être de dimension et de poids relativement réduits par rapport aux électrovannes alimentant une pluralité de compartiments mises en oeuvre conventionnellement dans un collecteur de type manifold déporté par exemple en pieds de lit.

Il en résulte, de surcroît, que lesdites électrovannes consomment une énergie réduite, notamment d'un rapport de 1 à 10 par rapport aux électrovannes mises en oeuvre conventionnellement.

Enfin, les électrovannes selon l'invention permettent de réguler ou adapter le gonflage des compartiments et faire des corrections de pression à l'intérieur des compartiments avec un temps de réaction beaucoup plus court. En pratique, le temps de réaction des électrovannes mises en oeuvre conventionnellement dans un collecteur de type manifold déporté en pieds de lit était de 1 à 3 secondes, alors qu'il est maintenant de l'ordre du 5/10 de seconde à 1 seconde voire moins.

Selon la présente invention, il est possible d'affecter un couple d'électrovannes à deux voies à chaque compartiment et de réguler l'alimentation/évacuation, notamment le gonflage/dégonflage de chaque compartiment individuellement et donc d'adapter la configuration du gonflage des différents compartiments du matelas de façon plus précise en fonction de la morphologie du patient ou en vertu d'autres critères selon les circonstances.

D'autre part, comme explicité précédemment, si l'on souhaite uniquement commander le gonflage/dégonflage des différents compartiments concernés, il est possible d'affecter une seule électrovanne à trois voies par compartiment coopérant avec un unique orifice ouvert permettant l'alimentation et l'évacuation de fluide du compartiment, l'autre orifice éventuel étant obturé.

Comme il sera explicité plus loin, l'invention permet aussi de fournir des dispositifs support de type matelas à vidange/remplissage alternatif des différents compartiments selon différents modes de réalisation au choix en fonction de la programmation de la commande des électrovannes.

Mais, l'encombrement réduit des électrovannes ainsi dédiées à chaque compartiment et implantées au niveau du matelas facilite surtout grandement leur mise en place et mise en oeuvre, ceci d'autant plus qu'il est ainsi possible de mettre en oeuvre un réseau de tuyaux de transfert de fluide dans le dispositif d'alimentation/évacuation de fluide simplifié et de mise en oeuvre moins encombrant.

L'avantage principal de la présente invention est donc la simplification de la mise en place et une mise en oeuvre à encombrement réduit du dispositif d'électrovannes et de tuyaux d'alimentation pour l'alimentation/évacuation en fluide desdits compartiments.

La présente invention permet également de pouvoir adapter aisément à la demande les fonctionnalités d'un matelas en ajoutant ou en supprimant aisément des électrovannes, ce qui permet de conférer un caractère évolutif aux fonctionnalités d'un matelas sans avoir à modifier le réseau de distribution pneumatique, comme dans la technique antérieure.

Dans un mode de réalisation préféré, le dispositif selon l'invention comporte 1 seul et même tuyau principal d'alimentation comportant une pluralité de dérivations permettant le raccordement à une pluralité de dites électrovannes coopérant directement avec ou intégrées auxdits orifices d'alimentation d'une pluralité de compartiments, de préférence tous les compartiments, lesdits orifices d'alimentation étant disposés d'un même coté longitudinal du dispositif de type matelas et ledit tuyau principal d'alimentation cheminant le long dudit coté longitudinal, l'alimentation dudit tuyau principal d'alimentation se faisant à partir d'un même dispositif d'injection de fluide.

On entend ici par « dérivation permettant le raccordement » que le tuyau principal d'alimentation comprend une ramification, par exemple par l'intermédiaire d'une pluralité de raccords en T dont les embouts sont directement adaptés à des embouts de raccordement des électrovannes ou par l'intermédiaire de petits bouts de tuyaux ou tuyaux secondaires d'alimentation dont les extrémités sont raccordées respectivement à des embouts de raccord en T sur le tuyau principal d'alimentation et des embouts de raccordement des électrovannes.

De même, on entend par « électrovanne coopérant directement avec un orifice » que l'embout de l'électrovanne est adapté directement sur l'orifice par exemple par enfoncement en force dans ledit orifice.

La présente invention remplace en fait le faisceau ou réseau de tuyaux d'alimentation des différents compartiments à partir des différentes électrovannes par un faisceau ou réseau de fils électriques d'alimentation beaucoup moins encombrant.

La mise en oeuvre d'un seul tuyau principal d'alimentation pour alimenter les différentes électrovannes représente un avantage important en terme de coût et de simplicité de mise en oeuvre du dispositif selon l'invention.

Une électrovanne selon l'invention commandant l'alimentation et/ou respectivement l'évacuation de fluide d'un compartiment doit permettre la circulation d'un débit de fluide divisé par p par rapport au débit d'une électrovanne commandant l'alimentation ou respectivement l'évacuation de fluide de p compartiments. En pratique, les électrovannes selon l'invention doivent permettre des circulations de fluides à des débits de 1 à 5 I/min au lieu de 50 I/min conventionnellement.

Plus particulièrement, lesdites électrovannes comprennent au moins :
- un premier embout à section transversale circulaire, de préférence présentant une surface externe crantée, ledit premier embout étant enfoncé en force dans un dit orifice d'alimentation ou évacuation de forme tubulaire élastique, et ledit premier embout renfermant un premier canal interne axial cylindrique de circulation dudit fluide, et
- un second embout à section transversale circulaire, de préférence présentant une surface externe crantée, ledit second embout étant enfoncé en force dans une extrémité de tuyau de dérivation raccordée à un dit tuyau principal d'alimentation ou raccordée à un tuyau d'évacuation ou débouchant à l'air libre, et ledit second embout renfermant un second canal interne axial cylindrique de circulation dudit fluide.

La surface externe crantée permet d'assurer une meilleure retenue dans ledit orifice tubulaire après enfoncement en force dans un orifice tubulaire élastique.

Plus particulièrement encore, lesdites électrovannes d'alimentation comprennent un second embout à section transversale circulaire, de préférence présentant une surface externe crantée, notamment, ledit second embout étant enfoncé en force dans une extrémité de tuyau de dérivation raccordée audit tuyau principale d'alimentation et ledit second embout renfermant un second canal interne axial cylindrique de circulation dudit fluide.

Plus particulièrement encore, lesdites électrovannes d'évacuation comprennent un second embout à section transversale circulaire, ledit second embout permettant d'évacuer ledit fluide à l'air libre.

Ledit second embout desdites électrovannes d'évacuation n'est donc pas connecté dans une extrémité d'un tuyau d'évacuation ou de tuyau de dérivation raccordée à un tuyau principale d'évacuation, le dispositif selon l'invention ne nécessitant pas la mise en oeuvre d'un tel tuyau d'évacuation.

Avantageusement, lesdites électrovannes et ledit tuyau d'alimentation sont placés à l'intérieur d'une housse de protection du matelas.

Dans un mode préféré, lesdites électrovannes d'évacuation coopérant avec ou étant intégrées auxdits orifices d'évacuation ne sont pas connectées à un tuyau d'évacuation, le fluide étant un fluide gazeux, notamment de l'air évacué à l'air libre ou le cas échéant dans une dite housse de protection.

Dans un autre mode de réalisation, on peut souhaiter vouloir évacuer le fluide en dehors de la housse en le canalisant dans un tuyau d'évacuation en sortie desdits seconds embouts des électrovannes d'évacuation.

Avantageusement, lesdites électrovannes sont commandées par un boîtier électronique de commande permettant de commander la mise en oeuvre au choix entre :
- un mode continu, dans lequel tous les compartiments sont gonflés, et
- différents modes à alternance de pression selon lesquels on réalise le gonflage au moins partiel puis regonflage d'une partie seulement des compartiments dans au moins une zone du matelas, lesdits compartiments à dégonfler/regonfler étant régulièrement espacés, de préférence un compartiment sur deux ou un compartiment sur trois, de préférence encore en dégonflant, regonflant successivement chaque compartiment dans ladite zone, de proche en proche dans la direction longitudinale dudit matelas en aller et retour dans ladite zone.

Plus particulièrement, tous les compartiments comprennent desdites électrovannes d'alimentation et/ou électrovannes d'évacuation, lesquelles sont commandées par un boîtier électronique de commande permettant de commander la mise en oeuvre au choix entre différents modes à alternance de pressions selon lesquels on réalise le dégonflage au moins partiel puis regonflage d'une partie des compartiments régulièrement espacés, de préférence un compartiment sur deux ou un compartiment sur trois, en dégonflant/regonflant chaque compartiment de proche en proche, dans la direction longitudinale dudit matelas, en aller et retour.

On comprend que lesdites électrovannes doivent être de format réduit et de forme adaptée à pouvoir être mises en place au niveau des orifices d'alimentation et évacuation des compartiments et à l'intérieur d'une housse de protection enveloppant ledit matelas sans risque de détérioration du matelas ou de la housse de par leur forme, et sans risque de gêner ou blesser le patient lorsque le matelas est dégonflé.

De préférence, lesdites électrovannes comprennent deux dits premier et second embouts disposés symétriquement par rapport à un corps principal définissant une surface externe de forme arrondie de préférence ledit corps principal étant de forme cylindrique, ledit corps principal étant de même axe longitudinal que lesdits premier et second embouts.

De préférence encore, le diamètre externe dudit corps de forme cylindrique est sensiblement identique ou peu supérieur à celui dudit tuyau d'alimentation. Ainsi, l'électrovanne peut être disposée dans le prolongement du tuyau dans un encombrement optimal.

Plus particulièrement, ledit corps principal comprend une cavité interne cylindrique dans laquelle débouchent les deux dits premier et deuxième canaux internes, ladite cavité interne renfermant un noyau magnétique longitudinal apte à être déplacé dans ladite direction longitudinale axiale de ladite électrovanne, ledit noyau magnétique se déplaçant à l'intérieur d'une bobine d'induction s'étendant axialement, ledit noyau pouvant se déplacer entre, d'une part, une position d'ouverture dans laquelle le noyau est dégagé des extrémités desdits premier et deuxième canaux internes débouchant dans ladite cavité interne de manière à laisser passer le fluide à travers ladite électrovanne entre les extrémités de ces deux dits premier et second embouts et, d'autre part, une position de fermeture dans laquelle ledit noyau obstrue l'extrémité débouchant dans ladite cavité interne de l'un des deux dits premier et deuxième canaux internes de l'électrovanne de manière à empêcher la circulation du fluide à travers ladite électrovanne entre les extrémités de ces deux dits premier et second embouts.

Ce type d'électrovanne selon l'invention est appelé « électrovanne compacte en ligne » car les différents éléments constitutifs sont disposés selon un même axe que l'axe longitudinal de l'électrovanne.

D'autre part, le passage du fluide à travers l'électrovanne entre ses premier et second embouts se fait toujours axialement selon le même axe longitudinal que celui de l'électrovanne, contrairement aux électrovannes classiques dans laquelle l'axe du noyau et le déplacement du noyau sont en général perpendiculaires à un conduit de passage du fluide à l'intérieur de l'électrovanne.

Dans une variante de réalisation, en l'absence d'activation électrique dudit noyau par ladite bobine, ledit noyau est maintenu en position de fermeture par un ressort agissant sur le noyau de manière à le maintenir contre l'une des deux extrémités desdits premier et deuxième canaux débouchant dans la dite cavité et, lorsque le noyau est déplacé par activation électrique de la bobine en position d'ouverture, le noyau est déplacé de manière à s'opposer au ressort et dégager le noyau de ladite extrémité dudit canal interne de manière à le maintenir éloigné des deux extrémités desdits premier et deuxième canaux débouchant dans ladite cavité.

Cette variante de réalisation est généralement choisie car une fois les compartiments convenablement ajustés en pression, le matelas est dit « à l'équilibre ». Il ne nécessite plus alors que des ajustements de pression de temps en temps si le patient change de position. En pratique, dans 75% du temps les vannes ne sont pas sollicitées).

Dans une autre variante, en l'absence d'activation électrique dudit noyau par ladite bobine, ledit noyau est maintenu en position d'ouverture par un ressort agissant sur le noyau de manière à le maintenir éloigné des deux extrémités desdits premier et deuxième canaux débouchant dans ladite cavité et, lorsque le noyau est déplacé par activation électrique de la bobine, le noyau est déplacé de manière à le maintenir contre l'une des deux extrémités desdits premier et deuxième canaux débouchant dans ladite cavité et ainsi l'obstruer.

De façon connue, le passage du fluide à travers ladite cavité entre ledit noyau et ladite bobine peut se faire par des rainures à la surface externe du noyau et/ou par une perforation traversant le noyau longitudinalement.

Lorsque ladite électrovanne est une électrovanne trois voies, elle comprend en outre un troisième canal interne permettant la communication entre ladite cavité interne et l'extérieur (c'est-à-dire l'air libre), de telle sorte que :
- dans ladite position d'ouverture dans laquelle le noyau est dégagé des extrémités desdits premier et deuxième canaux internes, ledit troisième canal interne est obturé et,
- dans ladite position de fermeture, ledit premier canal interne communiquant avec un seul orifice dudit compartiment est ouvert et ledit deuxième canal interne communiquant avec un dit tuyau d'alimentation est obturé et ledit troisième canal interne est ouvert permettant l'évacuation du fluide dudit compartiment à l'air libre.

A titre illustratif, les électrovannes présentent une longueur totale de 3 à 10 cm, de préférence de 4 cm à 6 cm et une surface externe à section transversale circulaire de diamètre maximal de 10 à 20 mm, lesdits premier et second embouts présentant de préférence une section transversale circulaire de diamètre de 5 à 15 mm et, de préférence encore, des canaux internes de 2 à 10 mm de diamètre, de préférence 4 à 7 mm.

La présente invention fournit également des électrovannes compactes en ligne comprenant un dit corps principal avec une cavité interne renfermant un dit noyau et une dite bobine d'induction de même axe longitudinal (X₁X'₁), les deux dits premier et second embouts (13-1, 13-2) renfermant desdits premier et deuxième canaux internes et étant disposés symétriquement par rapport audit corps principal et selon un même axe longitudinal (X₁X'₁) que ledit corps principal et lesdits premier et second embouts étant enfoncés dans des orifices tubulaires coudés dudit matelas et, respectivement, des extrémités coudées de tuyau de dérivation, et décalés longitudinalement dans la direction longitudinale du matelas, de manière à pouvoir disposer lesdites électrovannes alignées dans ladite direction longitudinale XX' dudit tuyau d'alimentation et dudit matelas.

De préférence, ledit corps principal et lesdits premier et second embouts et dits premier et deuxième canaux internes sont à section transversale circulaire.

Avantageusement, les différentes électrovannes sont reliées à un boîtier de commande permettant de commander au choix entre un dit mode continu et différent dit mode de fonctionnement à alternance de pressions, de manière à pouvoir réaliser à la demande un massage d'une partie au moins du corps du patient reposant sur ledit matelas.

Il est également possible par ce biais de commander un dégonflage localisé en une seule partie du corps, par exemple au niveau du cou pour permettre une trachéotomie.

Plus particulièrement encore, le boîtier électronique de commande des électrovannes est relié à au moins un capteur et ledit boîtier comprend des moyens électroniques aptes à commander l'alimentation d'air ou l'évacuation d'air dans desdits compartiments, de façon à maintenir une pression donnée de l'air à l'intérieur de chaque dit compartiment, de préférence à ce que la pression appliquée à la surface du matelas par le corps d'un patient y reposant soit sensiblement identique sur toute la surface du corps en contact avec le matelas.

D'autres caractéristiques et avantages de la présente invention apparaîtront à la lumière de la description détaillée qui va suivre :
- les figures 1 et 2 représentent, de façon schématique, un réseau de distribution pneumatique alimentant différents compartiments d'un matelas à partir d'un manifold comprenant respectivement six électrovannes (figure 1) et quatorze électrovannes (figure 2), selon l'art antérieur,
- les figures 3A et 3B représentent des schémas de distribution d'électrovannes dans un dispositif selon l'invention avec des électrovannes deux voies (figure 3A) et des électrovannes trois voies (figure 3B),
- la figure 4 est une vue de côté d'un matelas comprenant un dispositif selon l'invention,
- la figure 5 est une vue en coupe longitudinale d'une électrovanne à deux voies selon l'invention,
- la figure 6 est une vue en coupe longitudinale d'une électrovanne à trois voies selon l'invention,
- les figures 7A et 7B sont des vues selon VIIA et VIIB de la figure 5, et
- la figure 8 représente une électrovanne de l'art antérieur.

Sur la figure 1, on a représenté de façon schématique un matelas de la technique antérieure à l'invention comprenant seize compartiments constitués de boudins disposés transversalement à la direction longitudinale (XX') du matelas.

Ces seize compartiments sont répartis en trois zones.
- zone de tête Z₃ : un compartiment,
- zone de corps Z₂ : douze compartiments, et
- zone de pieds Z₁ : trois compartiments.

Sur la figure 1, on a représenté un système d'alimentation/évacuation d'air des différents compartiments à partir d'un collecteur comprenant un manifold d'alimentation M₁ comprenant trois électrovannes V₁, V₂, V₃ et un manifold d'évacuation M₂ comprenant trois électrovannes d'évacuation V₄, V₅ et V₆.

Ce collecteur est combiné à un boîtier de commande électronique non représenté. Le manifold d'alimentation M₁ est relié à une unique pompe/compresseur 7.

Chaque vanne d'alimentation V₁ à V₃ est connectée à un tuyau principal d'alimentation t₁ à t₃ alimentant une zone de compartiment (Z₁ à Z₃).

Plus précisément, l'électro-vanne V₁ alimente, à partir du tuyau principal d'alimentation t₁, les trois compartiments de la zone de T, le tuyau t₁ comprenant deux raccords en T, à partir de chacun desquels un tuyau secondaire de dérivation t'₁ permet d'assurer la connexion via un embout tubulaire de connexion à un orifice tubulaire d'alimentation 4-1 de chaque compartiment. Le raccord en T présente des embouts tubulaires à surface externe cannelée.

Symétriquement, à partir des orifices tubulaires d'évacuation 4-2 desdits compartiments, disposés sur le côté opposé du matelas sont raccordés par des embouts tubulaires de type « cannelé », des tuyaux d'évacuation secondaires t'₄, eux-mêmes raccordés par des raccords en T à un même tuyau principal d'évacuation t₄ connecté à l'électrovanne d'évacuation V₄ du manifold d'évacuation M₂.

Les électrovannes V₂ et V₅ assurent la commande de l'alimentation et, respectivement l'évacuation des douze compartiments de la zone du corps, par l'intermédiaire d'un tuyau principal d'alimentation t₂ et d'un tuyau principal d'évacuation t₅ connectés aux électrovannes d'alimentation V₂ et, respectivement, aux électrovannes d'évacuation V₅ du collecteur.

Les orifices d'alimentation 4-1 des douze compartiments de la zone du corps sont connectés au tuyau principal d'alimentation t₂ par l'intermédiaire de tuyaux secondaires d'alimentation t'₂, raccordés par des raccords T au tuyau t₂ et des embouts tubulaires non représentés aux orifices tubulaires d'alimentation 4-1.

Symétriquement, des tuyaux secondaires d'évacuation t'₅ assurent la connexion entre les orifices tubulaires d'évacuation 4-2 auxquels ils sont reliés par des embouts tubulaires non représentés, à une extrémité et, à l'autre extrémité, au tuyau principal d'évacuation t₅ à l'aide du raccord T.

Enfin, les électrovannes d'alimentation V₃ et électrovannes d'évacuation V₆ assurent la commande de l'alimentation, respectivement l'évacuation du compartiment unique de la zone de tête par l'intermédiaire d'un tuyau principal d'alimentation t₃ et d'un tuyau principal d'évacuation t₆ auxquels il sont respectivement reliés.

Ce réseau de liaison pneumatique entre les manifolds et les différents compartiments du matelas sur la figure 1, fonctionne en dit mode à pressions continues car tous les compartiments de chaque zone sont alimentés et/ou évacués de manière identique, la seule modulation possible étant entre les différentes zones à partir des trois couples d'électrovannes d'alimentation/électrovannes d'évacuation.

Sur la figure 2, on a représenté un matelas du même type mais connecté à un système d'alimentation/évacuation d'air pouvant fonctionner en mode à alternance de pressions avec un compartiment dégonflé sur trois, chaque compartiment successif étant successivement dégonflé/regonflé.

Ce mode à alternance de pressions implique de différencier la commande des différents compartiments de chaque zone par tiers, le cas échéant.

Ainsi, sur la figure 2, on voit que pour fonctionner en mode à alternance de pressions un sur trois, il est nécessaire de mettre en oeuvre les électrovannes et tuyaux suivants :
- trois électrovannes d'alimentation V₁, V₂ et V₃, alimentant par l'intermédiaire de trois tuyaux principaux d'alimentation t₁, t₂ et t₃, les trois orifices d'alimentation des trois compartiments de la zone de pieds. Et, symétriquement, trois tuyaux principaux d'évacuation t₈, t₉ et t₁₀ assurent la liaison des orifices d'évacuation des compartiments de la zone de pieds avec trois électrovannes d'évacuation V₈, V₉ et V₁₀.

Cette installation permet ainsi de dégonfler successivement chacun des compartiments de la zone de pieds, pendant que les deux autres restent gonflés.

De même, pour pouvoir dégonfler simultanément un compartiment sur trois de la zone de corps, c'est-à-dire quatre compartiments de la zone de corps sur douze espacés régulièrement, tous les compartiments successifs de la zone de corps étant de proche en proche dégonflés, il est nécessaire de mettre en oeuvre trois électrovannes d'alimentation V₄, V₅, V₆ alimentant par l'intermédiaire de trois tuyaux principaux d'alimentation t₄, t₅ et respectivement t₆, quatre compartiments par l'intermédiaire de quatre tuyaux secondaires d'alimentation raccordés les quatre à un même tuyau principal d'alimentation.

Ainsi, les tuyaux principaux d'alimentation t₄, t₅ et t₆ alimentent chacun quatre tuyaux de dérivation t'₄, t'₅ et t'₆ respectivement.

De manière symétrique, trois tuyaux secondaires de dérivation t'₁₁, t'₁₂ et t'₁₃ sont connectés à trois tuyaux principaux d'évacuation t₁₁, t₁₂ et t₁₃ respectivement.

Enfin, l'électrovanne d'alimentation V₇ et l'électrovanne d'évacuation V₁₄ commandent l'alimentation et respectivement l'évacuation de la zone de tête par, respectivement, un tuyau principal d'alimentation t₇ et tuyau principal d'évacuation t₁₄.

Les différents tuyaux d'alimentation et d'évacuation t₁ à t₁₄ et t'₂ à t'₁₃ ont une rigidité suffisante pour éviter les plicatures et tout en étant suffisamment de souplesse pour pouvoir adopter des cheminements relativement courbes.

Ces différents tuyaux ont un diamètre externe standard d'environ 15 mm et diamètre interne d'environ 10 mm. Les différentes électrovannes devant alimenter une pluralité de compartiments et donc délivrer des débits de fluide relativement importants pouvant aller jusqu'à 50 l/minute sont dimensionnés en conséquence et représentent des poids totaux de collecteur pouvant aller de 500 g (figure 1) à plus de 1 000 g (figure 2).

Mais, surtout, la multiplicité des tuyaux d'alimentation et d'évacuation représente un encombrement important, étant entendu que ces tuyaux doivent être insérés à l'intérieur d'une housse de protection entourant le matelas.

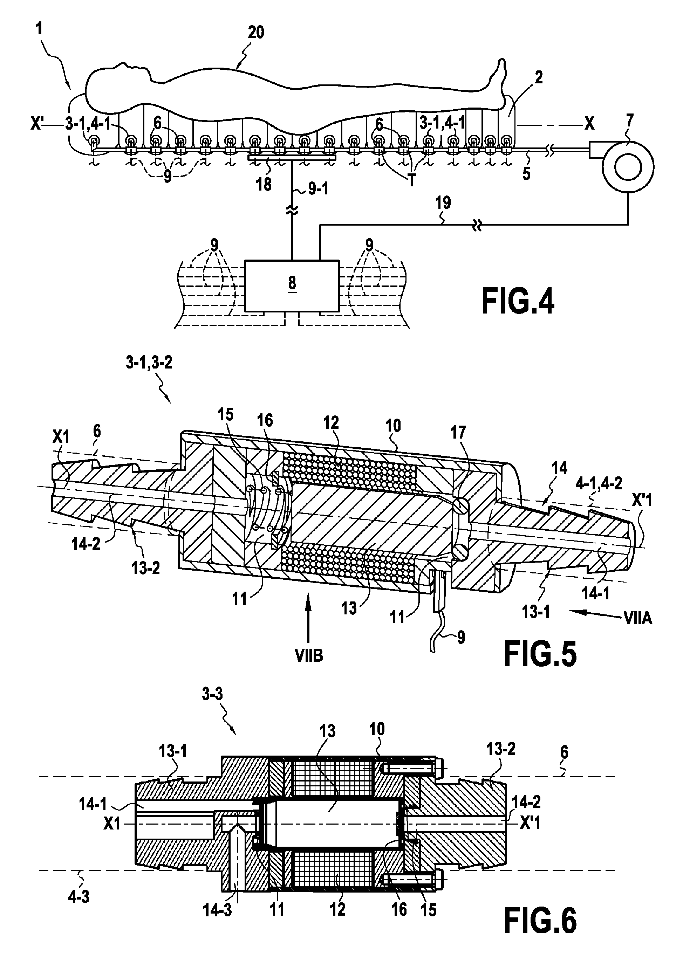

Sur les figures 3 et 4, on a représenté un système d'alimentation/évacuation des différents compartiments d'un matelas selon la présente invention de façon schématique.

Sur la figure 3, un même dispositif d'injection d'air 7 alimente, par l'intermédiaire d'un unique tuyau principal d'alimentation 5 (appelé « bus »), seize électrovannes d'alimentation à deux voies 3-1 connectées directement à chacun des seize orifices d'alimentation 4-1 de chacun des seize compartiments 2, disposés d'un même côté longitudinal dudit matelas. Sur le côté longitudinal opposé dudit matelas, sont disposés seize orifices d'évacuation 4-2 auxquelles sont connectées directement seize électrovannes d'évacuation à deux voies 3-2 évacuant l'air desdits compartiments 2 dans l'atmosphère et non pas dans un tuyau d'évacuation, comme dans la technique antérieure des figures 1 et 2.

Sur la figure 3A, on a disposé les orifices tubulaires d'alimentation 4-1 et d'évacuation 4-2 ainsi que les électrovannes d'alimentation 3-1 et d'évacuation 3-2 selon une direction perpendiculaire à la direction longitudinale XX' du matelas et du tuyau d'alimentation 5.

Toutefois, il peut être avantageux de mettre en oeuvre des orifices tubulaires d'alimentation et d'évacuation ainsi que des extrémités de tuyaux de dérivation 6, coudés à 90° et décalés longitudinalement dans la direction XX' de manière à pouvoir disposer les électrovannes à deux voies 3-1 et 3-2 alignées dans la direction longitudinale XX' du tuyau d'alimentation et du matelas, ceci afin de réduire encore l'encombrement, comme ci-après pour les électrovannes trois voies 3-3 de la figure 3B.

Sur la figure 4, on a montré un dispositif selon l'invention combiné à un capteur 18 relié au boîtier général de commande 8 qui permet également de commander par une liaison électrique 19 la pompe ou compresseur 7.

Sur les figures 3 et 4, on a également représenté de façon schématique une partie des fils électriques d'alimentation 9 des électrovannes 3-1 et 3-2 qui sont également représentées sur les figures 6A et 6B.

Les électrovannes d'alimentation 3-1 et électrovannes d'évacuation 3-2 présentent une structure telle que représentée sur la figure 5.

Ce corps principal cylindrique 10 comprend une cavité interne 11 comprenant une bobine d'induction 12, disposée axialement par rapport à la direction longitudinale XX'1 de l'électrovanne. A l'intérieur de la cavité interne 11, est disposé un noyau magnétique longitudinal cylindrique 13, apte à se déplacer à l'intérieur de la cavité interne 11 dans la direction longitudinale X₁X'₁ sous l'action de la bobine 12 lorsque celle-ci est activée électriquement.

Sur la figure 4, les différentes électrovannes 3-1, 3-2 sont reliées chacune par des fils d'alimentation électriques 9 à un boîtier de commande centralisé 8 permettant d'activer électriquement les bobines d'induction 12 et de déplacer les noyaux 13, comme il sera expliqué ci-après.

A chacune des extrémités longitudinales dudit corps cylindrique 10, l'électrovanne comprend un premier embout 13-1 à section transversale circulaire et respectivement un second embout 13-2 disposés symétriquement et axialement l'un par rapport à l'autre.

Ces embouts 13-1 et 13-2 définissent une surface externe crantée par des crans 14 à section transversale circulaire. Ces crans 14 définissant des embouts de type « cannelé » permettant de connecter lesdits embouts à des orifices tubulaires d'alimentation 4-1 ou orifices tubulaires d'évacuation 4-2 ou, le cas échéant, à des tuyaux secondaires d'alimentation 6.

Les premiers embouts 13-1 comprennent un premier canal interne axial 14-1, débouchant d'un côté dans la cavité interne 11 et, de l'autre côté, dans un compartiment 2 lorsque ledit premier embout 13-1 est enfoncé en force dans un orifice tubulaire d'alimentation 4-1 ou un orifice tubulaire d'évacuation 4-2.

De même, chaque second embout 13-2 comprend un second canal interne axial 14-2 communiquant avec la cavité interne 11 et l'extrémité libre du second embout 13-2.

Les seconds embouts 13-2 sont connectés aux tuyaux secondaires d'alimentation 6 pour les électrovannes d'alimentation 3-1 et débouchent à l'air libre pour les électrovannes d'évacuation 3-2.

Le fonctionnement de l'ouverture et la fermeture desdites électrovannes à deux voies 3-1 et 3-2 peut être réalisé selon deux modes de fonctionnement.

Sur la figure 5, en l'absence d'activation électrique dudit noyau par ladite bobine, ledit noyau est maintenu en position de fermeture par un ressort 15 agissant sur le noyau 13 de manière à le maintenir contre le joint torique 17 de l'extrémité de l'un des deux dits canaux débouchant dans ladite cavité. Lorsque le noyau est déplacé par activation électrique de la bobine, le noyau est déplacé de manière à comprimer le ressort et dégager le noyau de ladite extrémités dudit canal interne de manière à ce que, en combinaison éventuellement avec une butée 16, le noyau soit maintenu éloigné de l'extrémité desdits canaux 14-1 et 14-2 débouchant dans ladite cavité, de manière à permettre la circulation du fluide à travers ladite électrovanne depuis les extrémités libres de chacun des deux embouts 13-1, 13-2. L'air peut traverser la cavité 11 autour du noyau 13, éventuellement dans des rainures (non représentées) à la surface externe du noyau et/ou dans une perforation axiale traversant le noyau entièrement dans la direction longitudinale.

Sur la figure 3B, on a représenté une variante de réalisation d'un matelas selon l'invention, équipé d'une unique électrovanne trois voies à certains des compartiments.

En l'espèce, les compartiments des zones de pied et de tête Z₁ et Z₃ sont gonflés en mode continu à partir d'un dispositif 7 qui envoie de l'air pré-calibré en pression.

Seuls les compartiments de la zone de corps Z₂ sont équipés d'une unique électrovanne trois voies 3-3 adaptée directement sur un orifice faisant office d'orifice d'alimentation et d'évacuation 4-3, l'orifice de sortie 4-4 desdits compartiments étant obturé.

Ce mode de réalisation de la figure 3B est particulièrement utile pour fournir un matelas de massage dans la zone du corps Z₂ par un mode de fonctionnement à alternance de pressions, comme explicité ci-dessus.

Sur la figure 3B, les électrovannes trois voies 3-3 ont été disposées longitudinalement selon le même axe XX' du matelas et du tuyau d'alimentation 5.

Les orifices tubulaires d'alimentation/évacuation 4-3 et les extrémités de tuyau de dérivation 6 sont coudés à 90° et décalés longitudinalement dans la direction XX' de manière à pouvoir disposer lesdits premier et second embouts des électrovannes trois voies 3-3 alignées dans ladite direction longitudinale XX' du tuyau d'alimentation et du matelas de façon à optimiser l'encombrement de l'installation.

Sur la figure 6, on a représenté une électrovanne trois voies avec deux canaux internes longitudinaux, à savoir :
- un premier canal interne 14-1 à l'intérieur d'un dit premier embout 13-1 adapté directement sur les orifices tubulaires ouverts 4-3 desdits compartiments,
- un deuxième canal interne 14-2 à l'intérieur d'un second embout 13-2 adapté par enfoncement en force à l'intérieur de l'extrémité des tuyaux secondaires d'alimentation 6, et
- un troisième canal interne 14-3 communiquant entre l'intérieur de la cavité interne 11 et l'extérieur de l'électrovanne, débouchant axialement X₁X'₁ à l'intérieur de la cavité 11 et transversalement, au niveau de la surface externe du corps cylindrique 10, ledit troisième canal 14-3 présentant donc une forme en L ou coudée.

En position normale, le ressort 15 exerce une pression sur le noyau 13, de sorte que celui-ci se déplace longitudinalement et obture l'extrémité du troisième canal 14-3 en laissant ouvert l'extrémité du dit premier canal 14-1 débouchant dans ladite cavité parallèlement à l'extrémité dudit troisième canal 14-3. Ainsi, le fluide peut alimenter librement les compartiments 2 en passant par les premier et deuxième canaux internes 14-1 et 14-2 et la cavité interne 11.

Puis, lorsque l'électrovanne trois voies 3-3 est activée électriquement, le ressort 15 est comprimé, le noyau 13 se déplace longitudinalement en sens inverse, vient obturer ledit deuxième canal d'alimentation 14-2 et l'autre extrémité du noyau est dégagée des extrémités des premier et troisième canaux internes 14-1, 14-3.

Ainsi, l'air contenu dans ledit compartiment peut s'évacuer en passant par ledit premier canal interne 14-1 puis la cavité interne 11, et s'échapper à l'air libre via le troisième canal interne 14-3, dégonflant ainsi le compartiment.

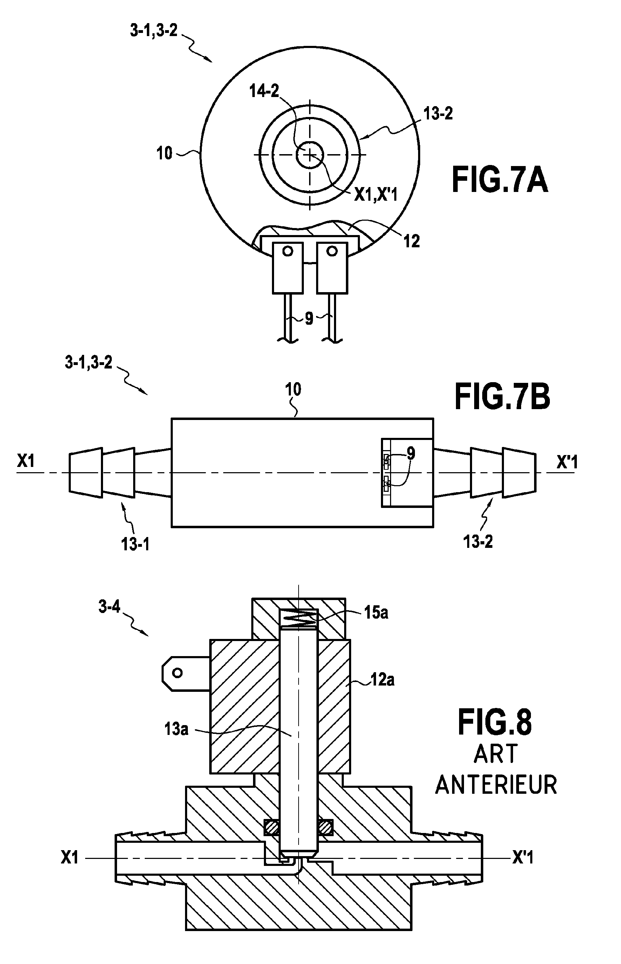

Pour illustrer l'originalité des électrovannes en ligne selon l'invention, sur la figure 8, on a représenté une vue d'une électrovanne classique 3-4 dans laquelle le déplacement du noyau 13a, sous l'action d'une bobine 12a (non représentée) et d'un ressort 15a se fait perpendiculairement à la direction X₁X'₁ de passage du fluide à travers ladite électrovanne entre ces deux embouts.

Du fait que les électrovannes 3-1 à 3-3 selon l'invention sont incorporées aux orifices tubulaires 4-1 à 4-3 des compartiments 2, et non déportés de façon centralisée à distance des orifices tubulaires, comme dans la technique antérieure, chaque électrovanne ne sert à piloter qu'un seul compartiment et les pertes de charge, entre l'électrovanne et le compartiment, sont considérablement réduites par rapport à la technique antérieure.

On rappelle en effet que les pressions « gaz » de l'air circulant étant de l'ordre de 10 à 100 mbar (au-dessus de la pression atmosphérique), la longueur des tuyaux de raccordement pneumatiques de la technique antérieure peut générer des pertes de charge importantes.

Ce positionnement des électrovannes au niveau des orifices des compartiments permet de mettre en oeuvre des électrovannes de dimensions réduites dans lesquelles il suffit, en pratique, de délivrer un débit de 1 à 5 l/min, ce qui requiert des surpressions mises en oeuvre de 10 à 100 mbar pour des diamètres internes de canaux 14-1 et 14-2 de 5 à 8 mm, plus particulièrement d'environ 7 mm.

Ces électrovannes compactes en ligne présentent une surface de passage de fluide équivalente à un conduit de 2 à 3 mm de diamètre.

Les électrovannes présentent une longueur totale de 50 à 70 mm, plus précisément de 60 mm de longueur et un diamètre externe de corps principal de 15 à 20 mm, plus précisément d'environ 17 mm. Lesdits premier et second embouts présentent un diamètre maximum d'environ 11 mm.

A titre illustratif, une électrovanne telle que décrite ci-dessus représente un poids de 15 à 20 g, de sorte que, même en mettant en oeuvre un plus grand nombre d'électrovannes (trente-deux électrovannes sur la figure 3 contre quatorze électrovannes pour la figure 2), le poids global du système d'alimentation/évacuation d'air selon la présente invention, tel que représenté sur la figure 3, reste très inférieur au système d'alimentation/évacuation d'air des figures 1 et 2 de la technique antérieure.

Sur les figures 5 à 7, on a représenté desdits premier embout 13-1 et desdits second embout 13-2 de même diamètre externe d'environ 11 mm, pour les enfoncer en force aux extrémités des tuyaux 6 et dans les orifices tubulaires 4-1 de compartiment standards actuels de diamètre interne d'environ 10,5 mm pour que ceux-ci se déforment et que l'assemblage soit résistant. Il est souhaitable de maintenir un diamètre interne du tuyau principal d'alimentation 5 à environ une valeur d'environ 10 mm de façon à pouvoir alimenter toutes les électrovannes au débit ci-dessus.

En revanche, on pourrait prévoir des diamètres internes de tuyaux secondaires de dérivation 6 et donc des raccords en T assurant le raccord des tuyaux secondaires 6 aux tuyaux principaux d'alimentation 5, de diamètre interne plus petit ainsi que des seconds embouts 13-2 de diamètres externes plus petits correspondants, mais on préfère, pour des raisons pratiques, garder des tuyaux de diamètre standard courant.

En pratique, selon la présente invention, les électrovannes remplacent les éléments tubulaires de liaison entre les orifices tubulaires des compartiments et les tuyaux secondaires d'alimentation ou d'évacuation.

La facilité de mise en oeuvre d'un système d'alimentation/évacuation selon la présente invention provient de ce que le boîtier technique en pieds de lit 8 est beaucoup moins volumineux dans la mesure où il n'y a plus de collecteur manifold centralisant les différentes électrovannes. Et surtout, on a supprimé les réseaux de tuyaux d'alimentation et d'évacuation d'air entre les électrovannes et les différents compartiments par un unique tuyau principal d'alimentation 5, le réseau de tuyau d'alimentation et d'évacuation étant remplacé par un réseau de fils électriques 9 assurant l'alimentation électrique des différentes électrovannes.

Mais ce réseau de fils électriques de 1 à 2 mm de diamètre est beaucoup plus simple à distribuer autour du matelas et incorporer, le cas échéant, dans une housse de protection que le réseau de tuyau d'alimentation/évacuation pneumatique.

L'avantage essentiel du système d'alimentation/évacuation selon la présente invention est qu'il permet une plus grande modularité puisque chaque compartiment peut être réglé individuellement et indépendamment les uns des autres.

Le fait de pouvoir alimenter/évacuer l'air de chaque compartiment individuellement permet d'obtenir une configuration plus exacte du matelas en fonction de la morphologie du patient.

D'autre part, il permet de mettre en oeuvre des modes alternés de dégonflage d'un compartiment sur deux ou d'un compartiment sur trois, au choix, en fonction de la programmation au niveau du boîtier de commande électronique 8 disposé au pied du lit et auxquels sont reliés les différentes électrovannes.

En outre, les électrovannes étant réparties sur la surface du matelas, cela rend le matelas plus maniable pour le personnel infirmier.

Il est ainsi possible d'ajouter ou supprimer facilement des électrovannes au niveau desdits compartiments et de faire évoluer les fonctionnalités du matelas aisément à la demande alors qu'une telle possibilité était exclue avec les réseaux pneumatiques mis en oeuvre dans la technique antérieure dans laquelle chaque modification des fonctionnalités du matelas impliquait une modification complète du réseau de tuyaux de distribution pneumatique, ce qui excluait de faire évoluer cette fonctionnalité.

Enfin, les différentes électrovannes sont activées par de très faibles puissances électriques et n'impliquent pas d'échauffement et peuvent donc fonctionner, en contact avec les compartiments et en ambiance confinée dans la housse de protection, pour autant qu'elles soient réalisées en métal inoxydables en milieu humide.

## Revendications

1. Dispositif de support, en particulier du corps d'un individu, de type matelas (1) comprenant une pluralité de n compartiments (2), i, de préférence au moins trois compartiments, de préférence encore de 3 à 24 compartiments aptes à être gonflés d'un fluide, en particulier gonflés d'air, une pluralité de p dits compartiments, p étant un nombre entier de 2 à n, comprenant chacun au moins un orifice d'alimentation et/ou évacuation de fluide (4-1, 4-2, 4-3) dudit compartiment et au moins une électrovanne (3-1, 3-2, 3-3) permettant de commander, l'alimentation de fluide et/ou l'évacuation de fluide desdits compartiments **caractérisé en ce que** chaque dite électrovanne coopère avec ou est intégrée à un dit orifice d'alimentation et/ou d'évacuation, chaque dite électrovanne (3-1,3-2, 3-3) étant dédiée au remplissage et/ou vidange d'un seul compartiment, et lesdites électrovannes ne coopèrent pas ou ne sont pas intégrées à un collecteur - distributeur de type manifold.

2. Dispositif selon la revendication 1, **caractérisé en ce que** lesdits compartiments comprennent chacun un orifice d'alimentation de fluide (4-1) et un orifice d'évacuation de fluide (4-2) et chaque dit compartiment concerné comprend ou coopère avec deux électrovannes d'alimentation et respectivement d'évacuation (3-1, 3-2) permettant de commander l'une, l'alimentation de fluide et, l'autre, l'évacuation de fluide et lesdites électrovannes sont intégrées ou coopèrent avec lesdits orifices d'alimentation et respectivement d'évacuation, chaque dite électrovanne (3-1, 3-2) étant dédiée au remplissage ou respectivement à la vidange d'un seul compartiment.

3. Dispositif selon la revendication 1, **caractérisé en ce que** chaque compartiment concerné comprend un unique orifice d'alimentation et d'évacuation (4-3) coopérant avec ou étant intégré à une unique électrovanne (3-3) à travers laquelle se fait aussi bien l'alimentation que l'évacuation dudit compartiment.

4. Dispositif selon l'une des revendications 1 à 3, **caractérisé en ce qu'**il comporte 1 seul et même tuyau principal d'alimentation (5) comportant une pluralité de dérivations (6) permettant le raccordement à une pluralité de dites électrovannes coopérant directement avec ou intégrées auxdits orifices d'alimentation d'une pluralité de compartiments (2), de préférence tous les compartiments, lesdits orifices d'alimentation (4-1, 4-3) étant disposés d'un même coté longitudinal du dispositif de type matelas et ledit tuyau principal d'alimentation (5) cheminant le long dudit coté longitudinal, l'alimentation dudit tuyau principal d'alimentation se faisant à partir d'un même dispositif d'injection de fluide (7).

5. Dispositif selon l'une des revendications 1 à 4, **caractérisée en ce que** les dites électrovannes (3-1, 3-2, 3-3) comprennent au moins :
- un premier embout (13-1) à section transversale circulaire, de préférence présentant une surface externe crantée, ledit premier embout étant enfoncé en force dans un dit orifice d'alimentation (4-1, 4-3) ou évacuation (4-2, 4-3) de forme tubulaire élastique, et ledit premier embout renfermant un premier canal interne (14-1) axial cylindrique de circulation dudit fluide, et
- un second embout (13-2) à section transversale circulaire, de préférence présentant une surface externe crantée, ledit second embout étant enfoncé en force dans une extrémité de tuyau de dérivation (6) raccordée à un dit tuyau principal d'alimentation (5) ou raccordée à un tuyau d'évacuation ou débouchant à l'air libre, et ledit second embout renfermant un second canal interne (14-2) axial cylindrique de circulation dudit fluide.

6. Dispositif selon l'une des revendications 1 à 5, **caractérisé en ce que** lesdites électrovannes comprennent deux dits premier et second embouts (13-1 et 13-2) disposés symétriquement par rapport à un corps principal (10) définissant une surface externe de forme arrondie de préférence ledit corps principal étant de forme cylindrique, ledit corps principal étant de même axe longitudinal (X₁X'₁) que lesdits premier et second embouts.

7. Dispositif selon l'une des revendications 5 ou 6, **caractérisé en ce que** ledit corps principal (10) comprend une cavité interne cylindrique (11) dans laquelle débouchent les deux dits premier et deuxième canaux internes (14-1, 14-2) de même axe longitudinal (X₁X'₁), ladite cavité interne renfermant un noyau magnétique longitudinal (13) apte à être déplacé dans ladite direction longitudinale axiale (X₁X'₁) de ladite électrovanne, ledit noyau magnétique se déplaçant à l'intérieur d'une bobine d'induction (12) s'étendant axialement selon le même dit axe longitudinal (X₁X'₁), ledit noyau pouvant se déplacer entre, d'une part, une position d'ouverture dans laquelle le noyau est dégagé des extrémités deux dits premier et deuxième canaux internes (14-1, 14-2) de même axe longitudinal (X₁ X'₁) débouchant dans ladite cavité interne (11) de manière à laisser passer le fluide à travers ladite électrovanne entre les extrémités de ces deux dits premier et second embouts et, d'autre part une position de fermeture dans laquelle ledit noyau obstrue l'extrémité débouchant dans ladite cavité interne de l'un des deux dits premier et deuxième canaux internes (14-1, 14-2) de l'électrovanne l'un des deux dits premier et deuxième canaux internes (14-1, 14-2) de l'électrovanne de manière à empêcher la circulation du fluide à travers ladite électrovanne entre les extrémités de ces deux dits premier et second embouts.

8. Dispositif selon la revendication 7, **caractérisé en ce que** en l'absence d'activation électrique dudit noyau par ladite bobine, ledit noyau est maintenu en position de fermeture par un ressort agissant sur le noyau de manière à le maintenir contre l'une des deux extrémités desdits canaux débouchant dans ladite cavité et lorsque le noyau est déplacé par activation électrique de la bobine en position d'ouverture, le noyau est déplacé de manière à s'opposer au ressort et dégager le noyau de la dite extrémités du dit canal interne de manière à le maintenir éloigné des deux extrémités des dits canaux débouchant dans la dite cavité.

9. Dispositif selon les revendications 3 et 7 ou 8, **caractérisé en ce que** ladite électrovanne est une électrovanne trois voies (3-3) comprenant en outre un troisième canal interne (14-3) permettant la communication entre ladite cavité interne (11) et l'extérieur, de telle sorte que :
- dans ladite position d'ouverture dans laquelle le noyau est dégagé des extrémités desdits premier et deuxième canaux internes (14-1, 14-2), ledit troisième canal interne (14-3) est obturé et,
- dans ladite position de fermeture, ledit premier canal interne communiquant avec un seul orifice (4-3) dudit compartiment est ouvert et ledit deuxième canal interne (14-2) communiquant avec un dit tuyau d'alimentation est obturé et ledit troisième canal interne est ouvert permettant l'évacuation du fluide dudit compartiment à l'air libre.

10. Dispositif selon l'une des revendications 1 à 9, **caractérisé en ce que** les électrovannes présentent une longueur totale de 3 à 10 cm de préférence 4 à 6 cm et une surface externe à section transversale circulaire de diamètre maximal de 10 à 20 mm, lesdits premiers embouts présentant, de préférence une section transversale circulaire de diamètre de 5 à 15 mm.

11. Dispositif selon l'une des revendications 1 à 10, **caractérisé en ce que** lesdites électrovannes et ledit tuyau d'alimentation sont placés à l'intérieur d'une housse de protection du matelas.

12. Dispositif selon l'une des revendications 1 à 11, **caractérisé en ce que** lesdites électrovannes sont commandées par un boîtier électronique de commande (8) permettant de commander la mise en oeuvre au choix entre :
- un mode continu, dans lequel tous les compartiments sont gonflés, et
- différents modes à alternance de pression selon lesquels on réalise le gonflage au moins partiel puis regonflage d'une partie seulement des compartiments dans au moins une zone du matelas, lesdits compartiments à dégonfler/regonfler étant régulièrement espacés, de préférence un compartiment sur deux ou un compartiment sur trois, de préférence encore en dégonflant, regonflant successivement chaque compartiment dans ladite zone, de proche en proche dans la direction longitudinale dudit matelas en aller et retour dans ladite zone.

13. Dispositif selon l'une des revendications 1 à 12, **caractérisé en ce que** lesdits compartiments forment des boudins disposés transversalement par rapport à la direction longitudinale axiale (XX') dudit matelas.

14. Dispositif selon l'une des revendications 5 à 13, **caractérisé en ce que** lesdites électrovannes sont des électrovannes compactes en ligne comprenant un corps principal (10) avec une cavité interne (11) renfermant un noyau (13) et une bobine d'induction (12) de même axe longitudinal (X₁X'₁), les deux dits premier et second embouts (13-1, 13-2) renfermant desdits premier et deuxième canaux internes (14-1, 14-2) et étant disposés symétriquement par rapport audit corps principal et selon un même axe longitudinal (X₁X'₁) que ledit corps principal et lesdits premier et second embouts étant enfoncés dans des orifices tubulaires (4-1, 4-2 et 4-3) coudés dudit matelas et, respectivement, des extrémités coudées de tuyau de dérivation, et décalés longitudinalement dans la direction longitudinale du matelas, de manière à pouvoir disposer lesdites électrovannes alignées dans ladite direction longitudinale XX' dudit tuyau d'alimentation et dudit matelas.
